# EUROPEAN PATENT APPLICATION

(11) **EP 1 928 104 A1**
(43) Date of publication of application: **04.06.2008**
(21) Application number: 06798189.4
(22) Date of filing: 21.09.2006
(51) Int. Cl.: H04B 3/54, H04J 1/00, H04J 3/00, H04L 12/28

(54) **COMMUNICATION APPARATUS FOR ALLOWING COMMUNICATION SYSTEMS TO BE COEXISTENT, AND COEXISTENCE METHOD**

(30) Priority: 22.09.2005 JP 2005276062
(71) Applicant: MATSUSHITA ELECTRIC INDUSTRIAL CO., LTD., Osaka 571-8501 (JP)
(72) Inventor: KURODA, Go Matsushita Electric Industrial Co.,Ltd., 2-1-61 Shiromi, Chuo-ku Osaka 540-6207 (JP); KUROBE, Akio Matsushita Electric Industrial Co.,Ltd., 2-1-61 Shiromi, Chuo-ku Osaka 540-6207 (JP); IKEDA, Koji Matsushita Electric Industrial Co.,Ltd., 2-1-61 Shiromi, Chuo-ku Osaka 540-6207 (JP); KOGA, Hisao Matsushita Electric Industrial Co.,Ltd., 2-1-61 Shiromi, Chuo-ku Osaka 540-6207 (JP); IGATA, Yuji Matsushita Electric Industrial Co.,Ltd., 2-1-61 Shiromi, Chuo-ku Osaka 540-6207 (JP)
(74) Representative: Gassner, Wolfgang
(86) International application number: PCT/JP2006/318697
(87) International publication number: WO 2007/034854

(57) **Abstract**

A communication apparatus and a method are provided for easily enabling two communication systems having different communication schemes and using the same communication medium to coexist. An access coexistence signal for notifying an in-home communication system (110 and 130) of the presence of an access communication system (120), and an in-home coexistence signal for sharing frequency and time resources between a plurality of in-home communication systems (110 and 130), are used. Further, by transmitting the two coexistence signals asynchronously, a process of synchronizing the access communication system (120) and the in-home communication system (110 and 130) is no longer required.

## Description

### TECHNICAL FIELD

The present invention relates to a communication apparatus and a coexistence method for enabling coexistence of communication systems. More particularly, the present invention relates to a technique of enabling coexistence of two communication systems which use the same communication medium and have different communication schemes, a communication apparatus included in each of the communication systems, and a coexistence method which is executed by the communication apparatus.

### BACKGROUND ART

Power line communication technology is a communication means for connection of a Personal Computer (PC) in a home to a network apparatus, such as a broadband router or the like, so as to access from the PC to the Internet. In the power line communication technology, since an existing power line is used as a communication medium, it is not necessary to perform a new wiring work, and high-speed communication can be achieved only by inserting a power supply plug into a power supply outlet available throughout a home. Therefore, research and development, and demonstration experiments of the power line communication technology have been vigorously conducted all over the world, and in Europe and the USA, a number of power line communication projects have already been commercialized.

An example of the power line communication is HomePlug Ver. 1.0 (see Non-Patent Document 1), which is a specification created by the HomePlug Powerline Alliance (USA). The specification is intended to be used mainly in applications, such as the Internet, mailing, and file transfer which are performed by PCs. HomePlug employs a CSMA/CA technique for a medium access control of which power line communication modem accesses a power line, and provides best-effort communication which does not guarantee a band to be used.

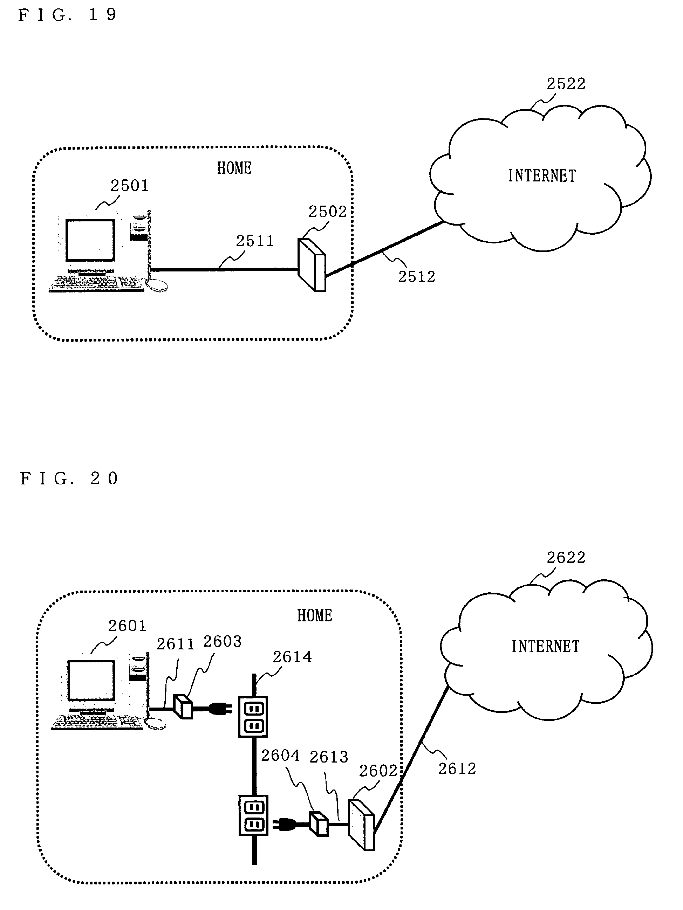

FIG. 19 is a diagram illustrating a configuration of a general communication system when accessing the Internet. In FIG. 19, a PC 2501 is connected via an Ethernet 2511, a broadband router 2502, and an access line 2512 to the Internet 2522. As the access line 2512, ADSL, FTTH, or the like is generally used. Here, when a place where the access line 2512 is withdrawn into a home is different from a room where the PC 2501 is placed, the Ethernet 2511 needs to be extended. Therefore, a power line communication apparatus has been commercialized in the form of a conversion adaptor between power line communication and Ethernet.

FIG. 20 illustrates a configuration of a communication system employing a conversion adaptor. In FIG. 20, two power line communication-Ethernet conversion adaptors 2603 and 2604 are connected to power supply outlets in rooms where a PC 2601 and a broadband router 2602 are installed, respectively, and provide best-effort communication by using power line communication via an in-home power line 2614. Thus, by using power line communication, wiring work is not required, and high-speed communication can be achieved only by inserting a power supply plug into a power supply outlet available throughout a home.

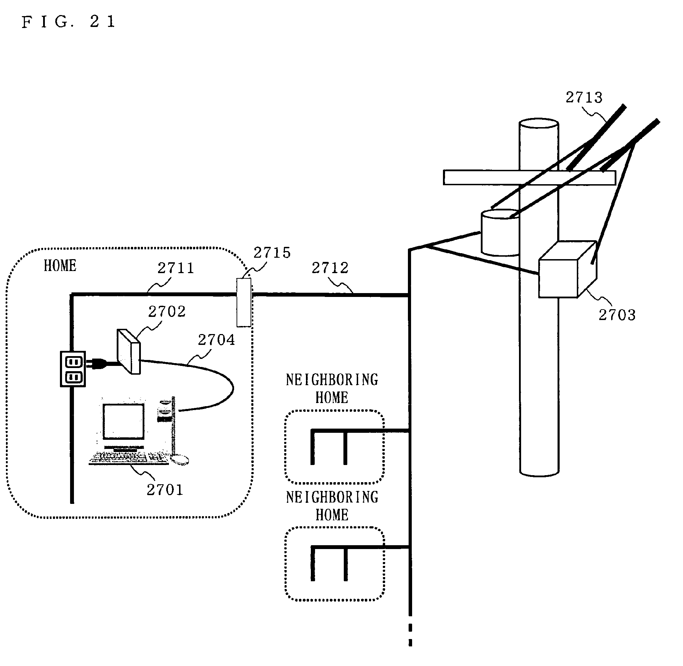

In Europe (Spain, etc.), an access power line communication modem has been used which employs, as an access line to the Internet, a power line for supplying a power to a home. FIG. 21 is a diagram illustrating a situation where the access power line communication modem is used. An access power line communication modem master station 2703 provided at an outdoor transformer, is connected via an intermediate voltage power distribution line 2713 to a broadband line, and communicates with an access power line communication in-home modem 2702 via a low voltage power distribution line 2712, a distribution switchboard 2715, and an in-home power line 2711. Further, by connecting the access power line communication modem 2702 with a PC 2701 via an Ethernet 2704, access to the Internet can be performed from the PC 2701.

Thus, by using the access power line communication modem, access to the Internet can be provided without withdrawing a cable or the like into a home. In addition, since the access power line communication modem 2702 is installed at any arbitrary outlet in a home, the degree of freedom of installing is higher than that of ADSL, FTTH, and the like.

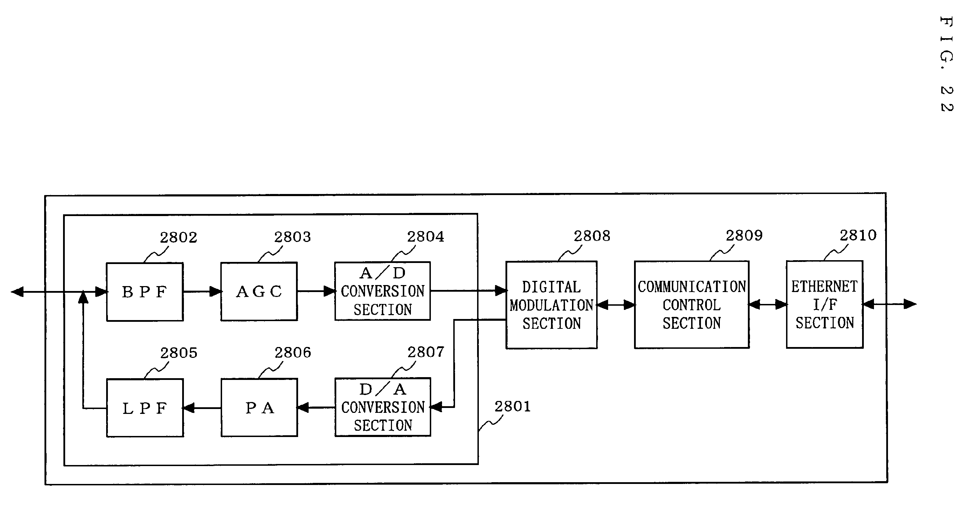

FIG. 22 is a diagram illustrating an internal configuration of a general power line communication modem which is implemented as a bridge to Ethernet. In FIG. 22, the power line communication modem comprises an Analog Front End (AFE) 2801, a digital modulation section 2808, a communication control section 2809, and an Ethernet I/F section 2810. The AFE 2801 includes a Band-Pass Filter (BPF) 2802, an Automatic Gain Control (AGC) 2803, an A/D conversion section 2804, a Low-Pass Filter (LPF) 2805, a Power Amplifier (PA) 2806, and a D/A conversion section 2807. Hereinafter, an operation of the power line communication modem will be described.

Assuming that Ethernet frames are transmitted onto a power line, when an Ethernet frame arrives through an Ethernet 2811, the communication control section 2809 is notified of the arrival via the Ethernet I/F section 2810. The communication control section 2809 determines a state of a communication channel, and outputs frame data to the digital modulation section 2808 with appropriate timing. The digital modulation section 2808 performs error correction addition, encoding, framing, and the like to modulate the frame data into a transmission data sequence. The D/A conversion section 2807 converts the transmission data sequence from a digital signal to an analog signal. The PA 2806 amplifies the analog signal. The LPF 2805 cuts off signals other than communication band components from the amplified analog signal, and inputs only the communication band components onto a power line. Next, in the case of reception from a power line, the BPF 2802 extracts a signal in a communication band. The AGC 2803 amplifies the extracted signal. The A/D conversion section 2804 converts the amplified analog signal into digital data. The digital modulation section 2808 performs frame synchronization detection, equalization, decoding, error correction, and the like with respect to the digital data to demodulate the digital data and notifies the communication control section 2809 of the resultant data as reception data. Thereafter, the reception data is transmitted as an Ethernet frame from the Ethernet I/F section 2810 to the Ethernet 2811.

As described above, various forms of power line communication from a home to an access network have been considered, and various types of power line communication techniques have been developed, but there is currently no unified power line communication scheme. However, in-home power lines are all connected together in a distribution switchboard, and are also connected with an outdoor power line. Therefore, if power line communication modems for different schemes are used in the same home and outside the home (close to the home), a communication signal from one modem is likely to reach other modems. A power line communication modem for one scheme cannot demodulate a signal of another scheme which a power line communication modem for the other scheme transmits in a communication channel, i.e., the signal of the other scheme is only noise. Therefore, if two different communication schemes are simultaneously performed, the two schemes interfere with each other, so that neither of the two schemes achieves communication, resulting in a significant decrease in communication speed, or the like.

As a method for avoiding such a problem, it is considered that a unified standard scheme for power line communication is created. However, a huge time and cost are required to create a new standard, so that such a standard will not be obtained in the near future.

As another method, it is considered that a band or a communication time is uniquely allocated to each communication system so as to avoid interference. In IEEE802.11a, which is a representative standard for wireless LAN, a band used therein is divided into a plurality of channels. IEEE802.11h is added to IEEE802.11a so as to meet requirements in Europe when a 5-GHz band is used (see Non-Patent Document 2). One of the functions specific in IEEE802.11h is a Dynamic Frequency Selection (DFS) function of detecting a band which is used by a radar, such as a meteorological radar or the like, and automatically shifting to a channel which avoids the band to avoid interference. An exemplary DFS operation will be hereinafter described.

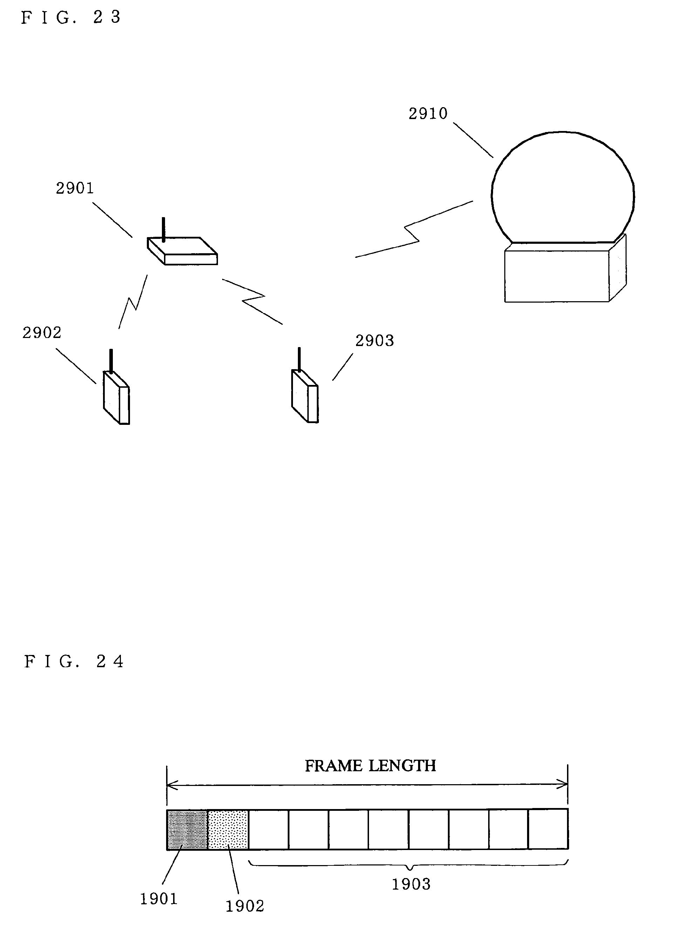

FIG. 23 is a diagram illustrating an exemplary configuration of a communication system which performs the DFS operation. The communication system of FIG. 23 is composed of an Access Point (AP) 2901 in IEEE802.11a, Stations (STAs) 2902 and 2903 in IEEE802.11a, and a meteorological radar 2910.

The AP 2901 transmits a command to stop communication using a beacon frame in predetermined time intervals to the STAs 2902 and 2903, to temporarily stop communication on a network. The AP 2901 performs scanning to determine whether or not radar waves are present in a channel currently used and other channels during the communication stop period. Also, the AP 2901 transmits an observation command frame to the STAs 2902 and 2903 to cause the STAs 2902 and 2903 to similarly perform scanning to determine whether or not radar waves are present in the channel currently used and other channels. After scanning for radar waves, the STAs 2902 and 2903 transmit an observation result reporting frame to the AP 2901. Thereafter, the AP 2901 determines a channel on which radar waves are present, based on the scan result by itself and the san results by the STAs 2902 and 2903. If radar waves are present on the currently used channel, the AP 2901 transmits a used channel shift command frame to the STAs 2902 and 2903, so that the channel is shifted to one in which radar waves are not present, avoiding interference between the communication wave of IEEE802.11a and the radar wave.

Thus, in IEEE802.11a, there is not a significant noise source other than meteorological radars in the 5-GHz band used therein, so that the DFS (IEEE802.11h, etc.) can be achieved only by providing a simple carrier sense mechanism to all terminals even in the case of radio waves of different modulation schemes. However, in a short-wave band which is used by power line communication modems, attenuated modem signals of different modulation schemes have the same signal level as that of noise of home appliances, so that the carrier sense mechanism cannot determine the presence or absence of power line communication, and therefore, a DFS mechanism, such as IEEE802.11h or the like, cannot be simply constructed.

To solve such a problem, it is considered that a coexistence signal which utilizes only a specific frequency is defined, and communication apparatuses which employ various power line communication schemes are caused to be able to transmit and receive the coexistence signal, thereby achieving temporal or frequency-spatial resource allocation of a power line communication medium.

For example, in Patent Document 1, a communication terminal employing OFDM uses only a specific subcarrier to transmit or receive a signal including a frame synchronization signal, and using this, synchronizes a master station of an access communication system and a master station of an in-home communication system, and thereafter, the master station of the access communication system allocates a time slot to the in-home communication system. Thereby, an access communication system which is assumed to be shared by a plurality of homes can use a power line communication medium with higher priority than that of an in-home communication system used only in each home while the access communication system and the in-home communication system coexist in a time domain.

FIG. 24 is a diagram illustrating a frame structure used in Patent Document 1. In Patent Document 1, communication is performed by repeating the frame of FIG. 24. In FIG. 24, a synchronization slot 1901 is a slot for synchronizing an access communication system with an in-home communication system, and includes a specific synchronization signal. Thereby, the access communication system and the in-home communication system can be synchronized with each other on a frame-by-frame basis. Next, a control slot 1902 is a slot for notifying how the following data slot 1903 is used by the access communication system and the in-home communication system. A master station of the access communication system uses this slot to notify a master station of each in-home communication system of an available slot. With such a mechanism, coexistence of the access communication system and the in-home communication system in the time domain is secured.
Patent Document 1: Japanese Patent Laid-Open Publication No. 2000-151547
Non-Patent Document 1: Yu-Ju Lin, "A Comparative Performance Study of Wireless and Power Line Networks", IEEE Communication Magazine, April, 2003, pp. 54-63
Non-Patent Document 2: IEEE Std., 802.11h-2003: "Wireless LAN Medium Access Control (MAC) and Physical Layer (PHY) specifications, Amendment 5: Spectrum and Transmit Power Management Extensions in the 5 GHz band in Europe"

### DISCLOSURE OF THE INVENTION

### PROBLEMS TO BE SOLVED BY THE INVENTION

However, in the method of Patent Document 1, it is necessary to synchronize the access communication system with the in-home communication system. There is not a significant problem between one access communication system and one in-home communication system. However, when there are a plurality of in-home communication systems, it is significantly difficult to control synchronization. Specifically, it is assumed that there are a plurality of in-home communication systems in an area, the in-home communication systems do not interfere with each other, and each in-home communication system determines timing of transmitting a coexistence signal by itself. When an access communication system is introduced into such an area, the access communication system needs to be synchronized with all of the in-home communication systems in the area. However, it is considerably difficult to synchronize the access communication system with all of the in-home communication systems which are already operated asynchronously.

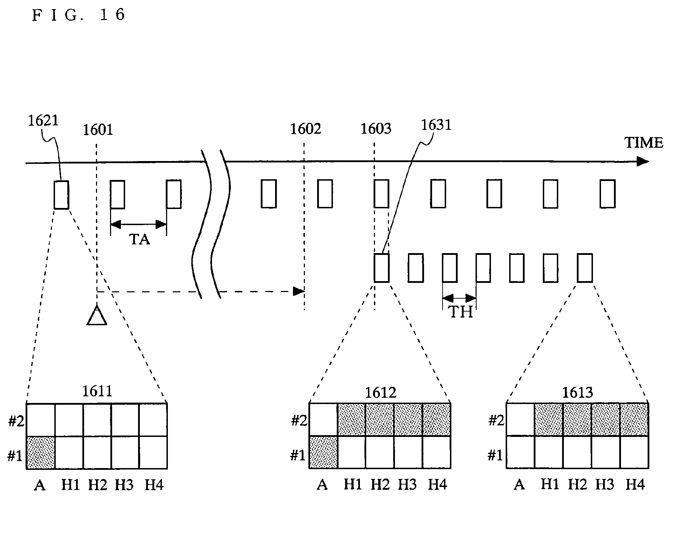

Conversely, the introduced access communication system may request all the existing in-home communication systems to synchronize with itself. Referring to FIG. 16, it is considered that an access power line communication modem master station 1603 or an access power line communication in-home modem 1602 transmits a coexistence signal, thereby making it possible to synchronize the in-home communication system with the access communication system. However, since the access power line communication modem master station 1603 is provided outside, a signal transmitted by the master station 1603 has already been significantly attenuated at the time when the signal reaches a home, so that not all of the in-home communication systems can receive the signal. To avoid such a situation, it is considered that the access power line communication in-home modem 1602 transmits a coexistence signal. However, since an access power line communication in-home modem is not provided in a home which is located in the service area of the access communication system, but does not use the service, an in-home communication system used in such a home is unlikely to be in synchronization with the access communication system. If a signal transmitted by such an in-home communication system which is not in synchronization with the access communication system leaks to the outside, resulting in interference with the signal of the access communication system. Thus, it is understood that the method of synchronizing existing in-home communication systems with a newly introduced access communication system is not practical.

As described above, it is understood that, when an access communication system is introduced into a situation where a plurality of in-home communication systems are asynchronously operated, it is considerably difficult to synchronize these communication systems together.

Therefore, an object of the present invention is to provide a communication apparatus and a coexistence method in which, in a plurality of different communication systems (particularly, a communication system in which it is difficult to determine the presence or absence of a communication signal using only a carrier sense mechanism (e.g., power line communication)), one or more in-home communication systems which perform communication within a limited area, and one access communication system which connects the limited area to a wide area network, can be easily caused to coexist without synchronization with each other on the same communication medium.

### SOLUTION TO THE PROBLEMS

The present invention is directed to a communication system in which one or more in-home communication systems performing communication within a limited area, and an access communication system connecting the limited area to a wide area network, are caused to coexist on the same communication medium by frequency division. The communication system of the present invention includes at least one communication apparatus belonging to the access communication system, and at least one communication apparatus belonging to the one or more in-home communication systems, these apparatuses comprising the following configurations.

The at least one communication apparatus belonging to the access communication system comprises a frequency band setting section for setting a frequency band to be used in the access communication system, an access coexistence signal generating section for generating an access coexistence signal including information about the set frequency band, a transmission timing determining section for determining timing of transmitting the access coexistence signal based on a reference cycle which is a rational multiple of a power supply cycle on a power line onto which power is supplied, and an access coexistence signal transmitting section for transmitting the access coexistence signal in accordance with the transmission timing.

The at least one communication apparatus belonging to the one or more in-home communication systems comprises an access coexistence signal receiving section for receiving the access coexistence signal transmitted from the access communication system, a frequency band setting section for setting a frequency band to be used in the in-home communication system other than the frequency band to be used in the access communication system, based on the received access coexistence signal, an in-home coexistence signal generating section for generating an in-home coexistence signal including information about the set frequency band, a transmission timing determining section for determining timing of transmitting the in-home coexistence signal based on the reference cycle so that the in-home coexistence signal has a transmission cycle different from that of the access coexistence signal, and the in-home coexistence signal transmission timing and the access coexistence signal transmission timing coincide at least once per a predetermined period of time, and an in-home coexistence signal transmitting section for transmitting the in-home coexistence signal with the transmission timing.

Preferably, the transmission cycle of the access coexistence signal and the transmission cycle of the in-home coexistence signal are set to have periods of time so that at least one of the transmission cycle of the access coexistence signal and the transmission cycle of the in-home coexistence signal is an odd multiple of the reference cycle, and one of the transmission cycle of the access coexistence signal and the transmission cycle of the in-home coexistence signal is not an integral multiple of the other. Preferably, the transmission cycle of the access coexistence signal is different in time by the reference cycle from the transmission cycle of the in-home coexistence signal. Preferably, the reference cycle has a period of time equivalent to 1/6 of the power supply cycle.

Preferably, the transmission timing determining section of the at least one communication apparatus belonging to the access communication system causes an interval between each transmission timing of the access coexistence signal to be narrower until a predetermined period of time passes after activation of the apparatus than after the predetermined period of time passes, or transmits a jamming signal indicating the presence of itself until a predetermined period of time passes after activation of the apparatus.
Also, preferably, the at least one communication apparatus belonging to the one or more in-home communication systems, when a communication state is deteriorated, stops currently executed communication and performs detection of the access coexistence signal with priority.

### EFFECT OF THE INVENTION

According to the present invention, the access communication system and the in-home communication system can coexist without synchronization of transmission timing of the coexistence signals thereof.

### BRIEF DESCRIPTION OF THE DRAWINGS

[FIG. 1] FIG. 1 is a diagram roughly illustrating a configuration of a communication system which employs a communication apparatus according to the present invention.
[FIG. 2] FIG. 2 is a diagram illustrating timing of transmission and reception of an access coexistence signal.
[FIG. 3] FIG. 3 is a diagram illustrating an exemplary configuration of an access coexistence signal transmitting station.
[FIG. 4] FIG. 4 is a flowchart for describing a process of coexistence of communication systems performed by the access coexistence signal transmitting station.
[FIG. 5] FIG. 5 is a diagram illustrating an exemplary configuration of an in-home-system master station 111.
[FIG. 6] FIG. 6 is a flowchart for describing a process of coexistence of communication systems performed by the in-home-system master station 111.
[FIG. 7] FIG. 7 is a diagram illustrating an exemplary configuration of an in-home-system slave station 112.
[FIG. 8] FIG. 8 is a flowchart for describing a process of coexistence of communication systems performed by the in-home-system slave station 112.
[FIG. 9] FIG. 9 is a diagram illustrating a structure of a coexistence signal used in a first embodiment.
[FIG. 10] FIG. 10 is a diagram for describing transmission cycles and transmission timings of an access coexistence signal and an in-home coexistence signal.
[FIG. 11] FIG. 11 is a diagram illustrating an exemplary coexistence process performed by a communication apparatus according to the first embodiment.
[FIG. 12] FIG. 12 is a diagram illustrating an exemplary coexistence process performed by a communication apparatus according to the first embodiment.
[FIG. 13] FIG. 13 is a diagram illustrating an exemplary coexistence process performed by a communication apparatus according to the first embodiment.
[FIG. 14] FIG. 14 is a diagram illustrating a structure of a coexistence signal used in a second embodiment.
[FIG. 15] FIG. 15 is a diagram illustrating a structure of a coexistence signal used in the second embodiment.
[FIG. 16] FIG. 16 is a diagram illustrating an exemplary coexistence process performed by a communication apparatus according to the second embodiment.
[FIG. 17] FIG. 17 is a diagram illustrating an exemplary coexistence process performed by a communication apparatus according to the second embodiment.
[FIG. 18] FIG. 18 is a diagram illustrating an exemplary coexistence process performed by a communication apparatus according to the second embodiment.
[FIG. 19] FIG. 19 is a diagram illustrating a conventional configuration of a general communication system when accessing from a home to the Internet.
[FIG. 20] FIG. 20 is a diagram illustrating a conventional configuration of a general communication system when accessing from a home to the Internet.
[FIG. 21] FIG. 21 is a diagram illustrating a conventional configuration of a general communication system when accessing from a home to the Internet.
[FIG. 22] FIG. 22 is a diagram illustrating an internal configuration of a general power line communication modem which is implemented as a bridge to Ethernet.
[FIG. 23] FIG. 23 is a diagram illustrating an exemplary configuration of a communication system which performs a DFS operation.
[FIG. 24] FIG. 24 is a diagram illustrating a frame structure used in the conventional art.

### BEST MODE FOR CARRYING OUT THE INVENTION

Hereinafter, embodiments of the present invention will be described with reference to the accompanying drawings. Note that the following embodiments will be described, assuming that a communication medium is a power line, though the communication medium may be a wireless, or a wired medium other than power lines.

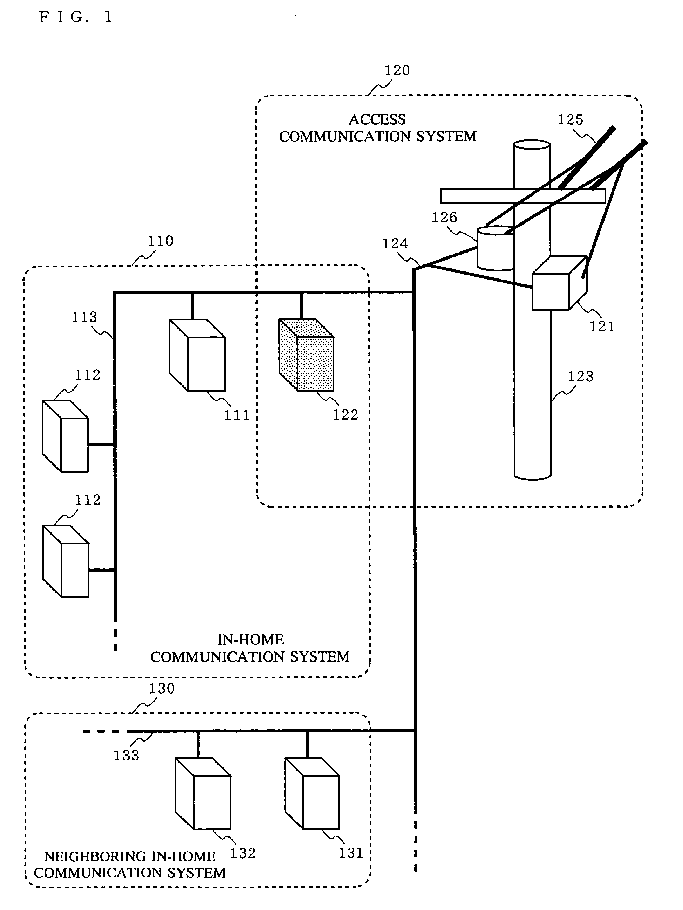

FIG. 1 is a diagram roughly illustrating a configuration of a communication system which employs a communication apparatus according to the present invention. In this example, there are three communication systems, i.e., in-home communication systems 110 and 130 and an access communication system 120. Note that the configuration of the communication system of FIG. 1 is only for illustrative purposes. The in-home communication system 110 and the in-home communication system 130 may be located in the same home, and there may be three or more in-home communication systems.

The in-home communication system 110 is a power line communication system which utilizes a power line 113 provided in a home, and is composed of an in-home-system master station 111 which controls coexistence of the in-home communication system 110 and the access communication system 120, and an in-home-system slave station 112 other than the in-home-system master station 111. The in-home-system master station 111 is a communication apparatus which has a function of receiving an access coexistence signal which is transmitted by a station belonging to the access communication system 120, and transferring the access coexistence signal to the in-home-system slave station 112. In general, only one in-home-system master station 111 is provided in a home, and may be fixedly specific or may be dynamically determined or changed during an operation. The in-home-system slave station 112 is a communication apparatus which is operated in a control of the in-home-system master station 111, and one or more in-home-system slave stations 112 are provided in one in-home communication system 110.

The in-home communication system 130 is a power line communication system which utilizes a power line 133 provided in a home, and is composed of an in-home-system master station 131 which controls coexistence of the in-home communication system 130 and the access communication system 120, and an in-home-system slave station 132 other than the in-home-system master station 131. The in-home-system master station 131 and the in-home-system slave station 132 have the same configuration, function and role as those of the in-home-system master station 111 and the in-home-system slave station 112 of the in-home communication system 110, respectively.

The access communication system 120 is a power line communication system which utilizes the in-home power line 113, a low voltage power distribution line 124 provided from the home to a pole transformer 126 provided on a utility pole 123, and an intermediate voltage power distribution line 125 from the pole transformer 126 to an electric power substation (not shown). Of communication apparatuses belonging to the access communication system 120, there are an access-system master station 121, and an access-system in-home apparatus (hereinafter referred to as an access-system slave station) 122 provided in the home, which are located within a range which causes interference with the in-home communication system 110. The access-system master station 121 may be provided as a communication apparatus separated from the pole transformer 126 as illustrated in FIG. 1, or may be incorporated in the pole transformer 126. Alternatively, in view of, for example, the case where a power line is buried under the earth, the access-system master station 121 may be incorporated in an appropriate apparatus other than the pole transformer 126.

Note that, for example, the access-system slave station 122 can also be provided on the low voltage power distribution line 124 outside the home, and a communication function of the in-home communication system 110 can be assigned to the access-system slave station 122. Although not illustrated in FIG. 1, the in-home-system master station 111 and the access-system slave station 122 are connected to each other via Ethernet, wireless LAN, or the like, or alternatively, for example, the in-home-system master station 111 and the access-system slave station 122 are provided in a single apparatus, thereby making it possible to achieve intercommunication between the in-home communication system 110 and the access communication system 120.

### (First embodiment)

In a first embodiment, an example in which three communication systems are caused to coexist using Frequency Division Multiplexing (FDM), will be described.
In the first embodiment, stations belonging to the communication systems 110 to 130 can each have a function capable of using a frequency band of 2 MHz to 30 MHz. The frequency band of 2 MHz to 30 MHz is previously divided into a channel #1 which employs a frequency band of 2 MHz to 16 MHz and a channel #2 which employs a frequency band of 16 MHz to 30 MHz. These channels are used so as to transmit and receive a coexistence signal for coexistence of the communication systems 110 to 130 without interference with each other, and perform data communication in each communication system. Although the frequency bands described in the first embodiment are used in a number of power line communication schemes, the present invention is not limited to the frequency bands.

The access communication system 120 can use either the channel #1 or the channel #2 with priority. The in-home communication systems 110 and 130 detect a channel which is being used by the access communication system 120 using an access coexistence signal described below, and share a channel which is not being used by the access communication system 120, by frequency division using an in-home coexistence signal described below. When the access communication system 120 is not present, i.e., neither the channel #1 nor #2 is being used, the in-home communication systems 110 and 130 can use all the channels #1 and #2.

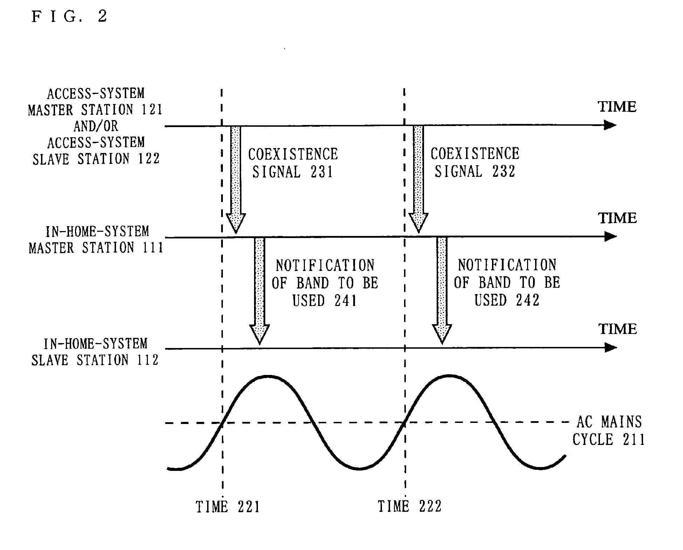

Initially, transmission and reception of coexistence signals which are performed by the communication systems 110 to 130, will be described. FIG. 2 is a diagram illustrating timing of transmission and reception of an access coexistence signal, with which a station in the access communication system 120 notifies the in-home communication system 110 of information about a channel which is used by the station.

The access-system master station 121 and/or the access-system slave station 122 transmit coexistence signals 231 and 232 including information about the channel #1 or #2 used by the access communication system 120, onto a power line, using a zero-crossing point (a point having a phase of 0 degrees) of an alternating current flowing through the power line as a reference (times 221 and 222). Note that the access coexistence signals 231 and 232 may be transmitted using a time point having a phase of the alternating current deviated from the zero-crossing point by a predetermined amount, as a reference, instead of the zero-crossing point. Alternatively, the access coexistence signal may be transmitted at points obtained by dividing an interval between zero-crossing points or time points having a phase of the alternating current deviated from the zero-crossing points by a predetermined amount (reference points) by an integer value. Also, the access coexistence signal does not need to be transmitted at all the transmission timings defined using the above-described reference.

The in-home-system master station 111 receives the access coexistence signals 231 and 232 to determine a channel which should be used by itself. Also, the in-home-system master station 111 notifies the in-home-system slave station 112 in the in-home communication system 110 of information about the sub-channel used by the in-home communication system 110, using a function of the in-home communication system 110, i.e., band-to-be-used notifying signals 241 and 242 in FIG. 2.

Note that, in this example, the in-home-system slave station 112 obtains the information about the channel used by itself, from the in-home-system master station 111. However, the in-home-system slave station 112 may directly receive an access coexistence signal transmitted by the access-system master station 121 and/or the access-system slave station 122, and determine a channel which is used by itself using the same algorithm as that of the in-home-system master station 111.
Note that the in-home-system master station 131 and the in-home-system slave station 132 in the in-home communication system 130 have the same operations as those of the in-home-system master station 111 and the in-home-system slave station 112, respectively.

Next, a detailed configuration and process operation of each station in the in-home communication system 110 and the access communication system 120 will be described.

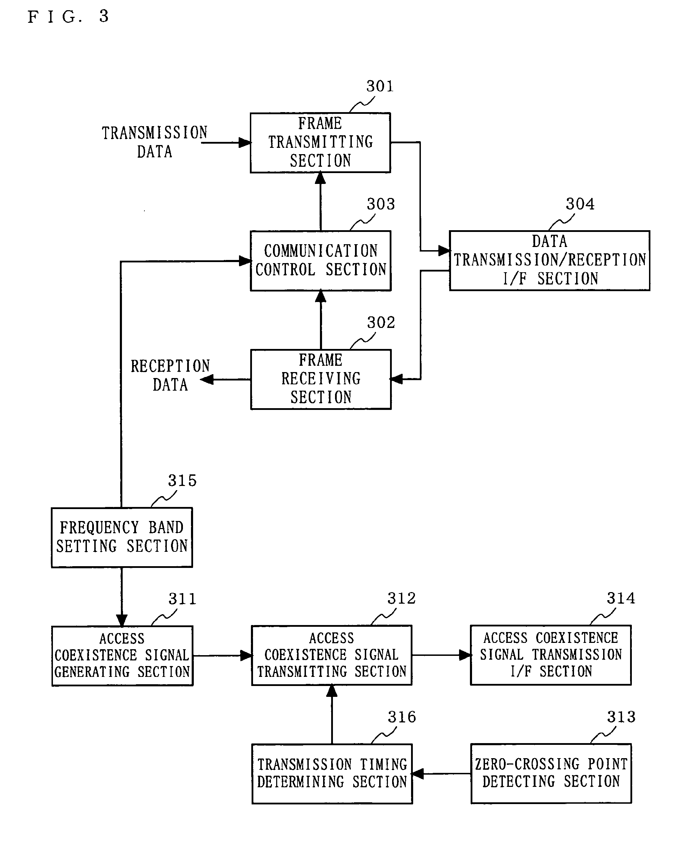

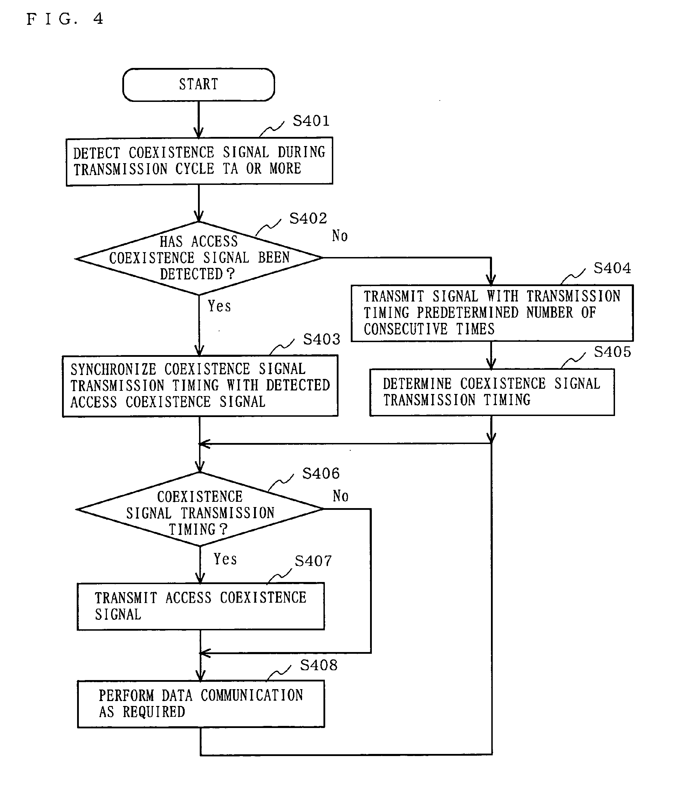

FIG. 3 illustrates an exemplary configuration of a station having a function of transmitting a signal for coexistence with the in-home communication system 110 (hereinafter referred to as an access coexistence signal transmitting station), of the access-system master station 121 and the access-system slave station 122. The access coexistence signal transmitting station of FIG. 3 is roughly divided into parts 301 to 304 used for data communication in the access communication system 120, and parts 311 to 316 used for transmission of an access coexistence signal. FIG. 4 is a flowchart for describing only a process relating to coexistence of the communication systems of processes performed by the access coexistence signal transmitting station.

A frame receiving section 302 receives a transmission frame via a data transmission/reception I/F section 304, and subjects the frame into a required process to generate reception data. A frame transmitting section 301 frames data to be transmitted in the access communication system 120, and transfers the data to the data transmission/reception I/F section 304, thereby performing data transmission. In this case, a communication control section 303 which controls data transmission/reception while referencing information from the frame receiving section 302, controls timing of data transmission of the frame transmitting section 301.

When an access coexistence signal transmitting station is activated, a frequency band setting section 315 determines a frequency band which is to be used by itself, more specifically, whether the channel #1 or the channel #2 is to be used, in accordance with a predetermined procedure. The channel to be used may be previously set in the access coexistence signal transmitting station or may be set by communication with another station of the access communication system 120. The access coexistence signal transmitting station also detects an access coexistence signal during a period of time which is longer than or equal to a transmission cycle TA of the access coexistence signal (step S401).

If an access coexistence signal is detected during the period of time, the access coexistence signal transmitting station is operated in synchronization with the detected access coexistence signal (step S403). If an access coexistence signal is not detected, an access coexistence signal is transmitted a predetermined number of consecutive times with the access coexistence signal transmission timing defined by the above-described method, with reference to zero-crossing points of an alternating current flowing through a power distribution line which are detected by a zero-crossing point detecting section 313 (step S404). Note that an access coexistence signal does not necessarily need to be transmitted with all the access coexistence signal transmission timings. For example, an access coexistence signal may be transmitted every other access coexistence signal transmission timing. In this case, an access coexistence signal generating section 311 receives information about a channel which is used by the access communication system 120, from the frequency band setting section 315, and based on this, generates an access coexistence signal (the signal 231 or 232 of FIG. 2) including the information about the channel used by the access communication system 120, and transfers the signal to an access coexistence signal transmitting section 312. Further, a transmission timing determining section 316 determines timing of transmitting an access coexistence signal after an access coexistence signal is transmitted a predetermined number of consecutive times (step S405). After the above-described activation sequence is completed, the access coexistence signal transmitting station goes to a normal sequence.

In the normal sequence, the transmission timing determining section 316 designates access coexistence signal transmission timing with respect to the access coexistence signal transmitting section 312 in accordance with notification from the zero-crossing point detecting section 313. When the access coexistence signal transmission timing arrives (step S406), the access coexistence signal transmitting section 312 transmits an access coexistence signal via an access coexistence signal transmission I/F section 314 with the timing designated by the transmission timing determining section 316 (step S407). At the same time, the parts 301 to 304 for data communication perform data communication as required (step S408). Thereafter, processes of steps S406 to S408 are repeatedly performed.

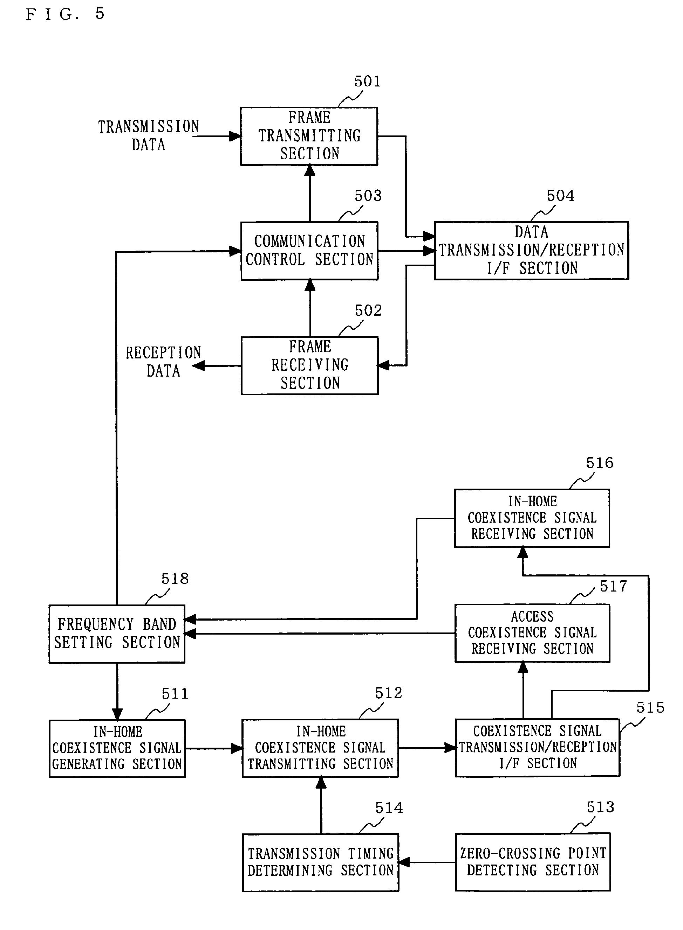

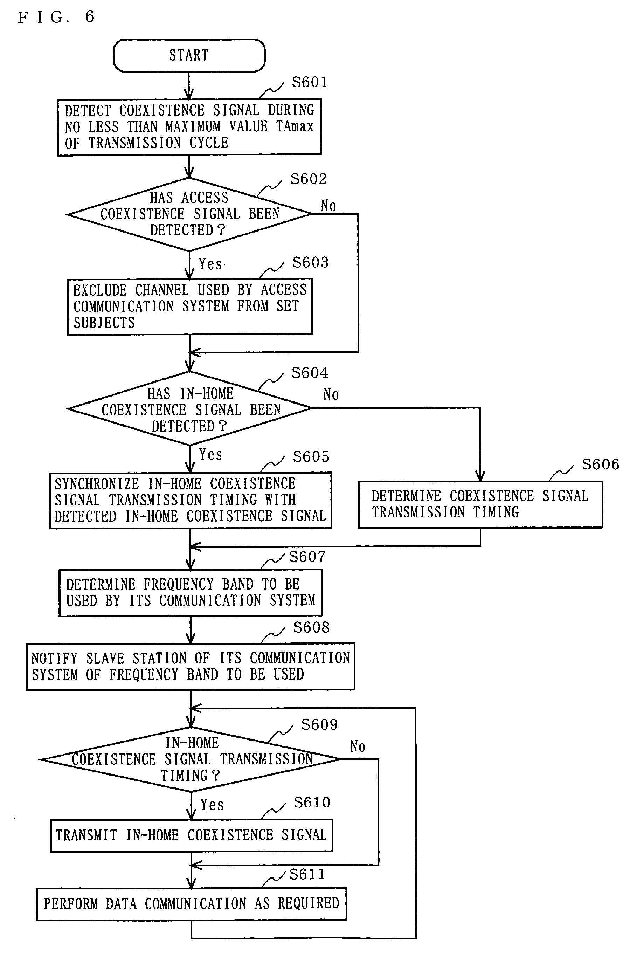

FIG. 5 illustrates an exemplary configuration of the in-home-system master station 111. The in-home-system master station 111 of FIG. 5 is roughly divided into parts 501 to 504 used for data communication performed in the in-home communication system 110, and parts 511 to 518 for transmission of a coexistence signal. FIG. 6 is a flowchart for mainly describing a process relating to coexistence of communication systems, of processes performed by the in-home-system master station 111. Note that, in this embodiment, in the in-home communication system 110, the in-home-system master station 111 receives an access coexistence signal transmitted by the access communication system 120, and transmits and receives an in-home coexistence signal transmitted by the in-home communication system 130. Alternatively, the in-home-system slave station 112 may play such a role, or a plurality of stations in the in-home communication system 110 may have the configuration described here. The master station 131 of the in-home communication system 130 also has the same configuration and function as those of the in-home-system master station 111 of the in-home communication system 110.

A frame receiving section 502 receives a transmission frame via a data transmission/reception I/F section 504, and subjects the frame into a required process to generate reception data. A frame transmitting section 501 frames data to be transmitted in the access communication system 120, and transfers the data to the data transmission/reception I/F section 504, thereby performing data transmission. In this case, a communication control section 503 which controls data transmission/reception while referencing information from the frame receiving section 502, controls timing of data transmission of the frame transmitting section 501.

When the in-home-system master station 111 is activated, detection of a coexistence signal is performed during a period of time which is longer than or equal to a maximum value TAmax of the transmission cycle TA of the access coexistence signal (step S601). If an access coexistence signal is detected during the period of time, an access coexistence signal receiving section 517 confirms a channel used by the access communication system 120 from the access coexistence signal, and notifies a frequency band setting section 518 of the channel. In response to this, the frequency band setting section 518 excludes the channel used by the access communication system 120 from set subjects so that the channel is not used (step S603).

Further, if an in-home coexistence signal is detected in step S601, a transmission timing determining section 514 synchronizes the in-home coexistence signal with its own in-home coexistence signal transmission timing (step S605). On the other hand, if an in-home coexistence signal is not detected in step S601, the transmission timing determining section 514 determines in-home coexistence signal transmission timing by itself with reference to a zero-crossing point of an alternating current flowing through a power distribution line which is detected by a zero-crossing point detecting section 513 (step 5606). Note that, although detection of a coexistence signal is performed during a period of time which is longer than or equal to the maximum value of TAmax of the transmission cycle TA of an access coexistence signal in this example, if a cycle TH of transmission of an in-home coexistence signal is larger than the maximum value TAmax, it is necessary to designate a time which is longer than or equal to the in-home coexistence signal transmission cycle TH, for detection of a coexistence signal.

Next, the frequency band setting section 518 determines a frequency band which is to be used in a communication system (step S607), and notifies a slave station in the communication system of the frequency band (step S608). Note that a method with which a plurality of in-home communication systems negotiate with each other using an in-home coexistence signal so as to determine a frequency band which is to be used by themselves, is not within the scope of the present invention and will not be described.

An in-home coexistence signal generating section 511 is notified of the frequency band information determined by the frequency band setting section 518. Based on this information, the in-home coexistence signal generating section 511 generates and transfers an in-home coexistence signal to an in-home coexistence signal transmitting section 512. The in-home coexistence signal transmitting section 512 transmits the in-home coexistence signal via a coexistence signal transmission/reception I/F section 515 with the transmission timing designated by the transmission timing determining section 514 (steps S609 and S610). On the other hand, the in-home coexistence signal received via the coexistence signal transmission/reception I/F section 515 is transferred to an in-home coexistence signal receiving section 516, and the frequency band setting section 518 is notified of information about a frequency band used by another in-home communication system. At the same time, the parts 501 to 504 for data communication perform data communication as required (step S611). Thereafter, the processes of steps S609 to S611 are repeatedly performed.

Note that the frequency band setting section 518 may change a frequency band or a time used by itself based on the received information about a frequency band used by another in-home communication system. The changing process may be executed with appropriate timing at the same time when the processes of steps S609 to S611 are performed, or between the processes of steps S609 to S611 (not shown in FIG. 6).

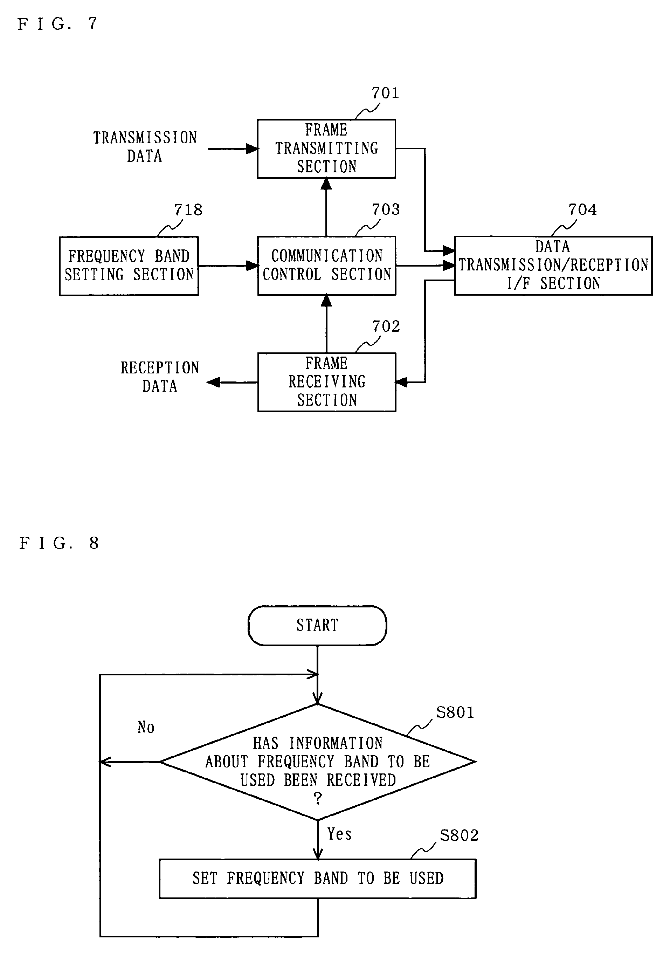

FIG. 7 illustrates an exemplary configuration of the in-home-system slave station 112. The in-home-system slave station 112 of FIG. 7 is roughly divided into parts 701 to 704 used for data communication performed in the in-home communication system 110, and parts 711 to 718 used for transmission of an in-home coexistence signal. FIG. 8 is a flowchart for describing a process relating to coexistence of communication systems, of processes performed by the in-home-system slave station 112.

A frame receiving section 702 receives a transmission frame via a data transmission/reception I/F section 704, and subjects the data to a required process to generate reception data. A frame transmitting section 701 frames data to be transmitted in the access communication system 120, and transfers the data to the data transmission/reception I/F section 704, thereby performing data transmission. In this case, a communication control section 703 which controls data transmission/reception while referencing information from the frame receiving section 702, controls timing of data transmission of the frame transmitting section 701.

The in-home-system slave station 112, when activated, is ready to receive information about a frequency band to be used from the in-home-system master station 111 in a communication system (step S801). When the in-home-system slave station 112 receives the information about a frequency band to be used from the in-home-system master station 111, a frequency band setting section 718 sets a frequency band to be used by itself based on the received information (step S802).

Although the in-home-system slave station 112 receives information about a frequency band to be used from the in-home-system master station 111 in the first embodiment, the in-home-system slave station 112 may have a configuration similar to that of the in-home-system master station 111 to determine frequency band to be used by itself using a similar algorithm. In this case, both the in-home-system master station 111 and the in-home-system slave station 112 have a configuration which can be represented by FIG. 5, and a coexistence process which can be represented by the flowchart of FIG. 6 where step S608 is removed.

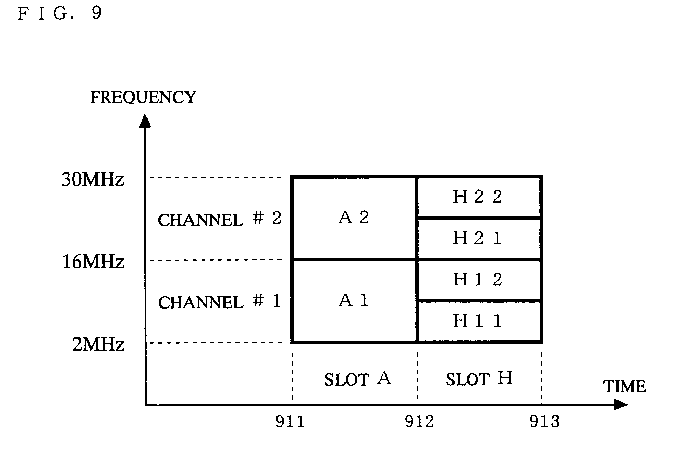

Next, a structure of a coexistence signal used in the first embodiment will be described. FIG. 9 illustrates the coexistence signal, where the horizontal axis represents times, and the vertical axis represents frequencies (channels). The coexistence signal has two time slots, i.e., a slot A from time 911 to time 912 and a slot H from time 912 to time 913, in the time-axis direction.

The slot A is a time slot in which the access communication system 120 transmits an access coexistence signal. The slot A is composed of an area A1 indicating that frequencies corresponding to the channel #1 of 2 MHz to 16 MHz are used, and an area A2 indicating that frequencies corresponding to the channel #2 of 16 MHz to 30 MHz are used. When occupying the channel #1, the access communication system 120 transmits a signal in the area A1 with timing designated by the transmission timing determining section 316. When occupying the channel #2, the access communication system 120 transmits a signal in the area A2 with timing designated by the transmission timing determining section 316. The in-home communication systems 110 and 130 can determine a channel which is being used by the access communication system 120 based on the presence or absence of a signal from the area A1 or A2.

The slot H is a time slot in which the in-home communication systems 110 and 130 transmit an in-home coexistence signal. The slot H is composed of areas H11 and H12 into which the frequency band corresponding to the channel #1 of 2 MHz to 16 MHz is halved, and areas H21 and H22 into which the frequency band corresponding to the channel #2 of 16 MHz to 30 MHz is halved. Specifically, the area H11 corresponds to frequencies 2 MHz to 9 MHz, the area H12 corresponds to frequencies 9 MHz to 16 MHz, the area H21 corresponds to frequencies 16 MHz to 23 MHz, and the area H22 corresponds to frequencies 23 MHz to 30 MHz. The in-home communication systems 110 and 130 share the frequency band of 2 MHz to 30 MHz using the four areas into which the frequency band is divided. For example, when the in-home communication system 110 uses the frequency band of 2 to 16 MHz, the in-home communication system 110 transmits a signal in the areas H11 and H12. Thereby, the in-home communication system 130 can determine which frequency band is being used by the in-home communication system 110.

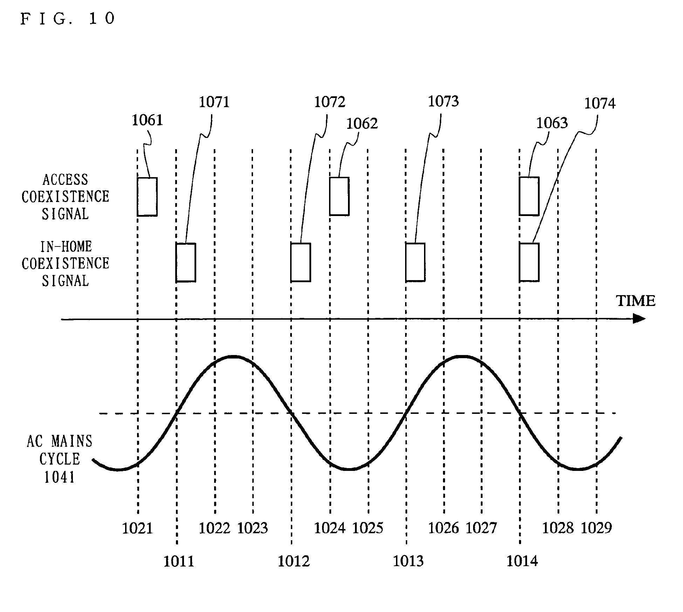

Referring to FIG. 10, the transmission cycles and transmission timings of the access coexistence signal and the in-home coexistence signal will be further described.
The present invention is characterized in that the access coexistence signal and the in-home coexistence signal have different transmission cycles, and the same transmission timing at least one time every predetermined period of time. For example, it is considered that a rational multiple of a power supply cycle of a power line onto which power is supplied is defined as a reference cycle, and based on the reference cycle, the transmission timings of the access coexistence signal and the in-home coexistence signal are determined. More specifically, at least one of the transmission cycle of the access coexistence signal and the transmission cycle of the in-home coexistence signal may be set to be an odd multiple of the reference cycle, and one of the transmission cycle of the access coexistence signal and the transmission cycle of the in-home coexistence signal may be set to be a time which is not an integral multiple of the other.

For example, in the first embodiment, the transmission cycle TH of the in-home coexistence signal is assumed to correspond to three of six equal parts into which the cycle (time 1021 to time 1029) is divided, i.e., 1/2 of the power supply cycle (equivalent to 180 degrees in phase), where zero-crossing points (time 1011 to time 1014) of the power supply cycle on a power line to which a communication apparatus belonging to each communication system is connected are references. The transmission cycle TA of the access coexistence signal is assumed to correspond to five (equivalent to 300 degrees in phase) of six equal parts into which the cycle is divided, where, similarly, zero-crossing points of the power supply cycle on a power line to which a communication apparatus belonging to each communication system is connected are references. In other words, the coexistence signal transmission timing is selected based on the reference cycle which is a rational multiple (1/6 times) of the power supply cycle on the power line.

Since the in-home coexistence signal is a value which is used in common by the in-home communication systems 110 and 130, the transmission cycle needs to be uniquely determined. Since it is assumed that only one access communication system 120 is present, the access communication system 120 can independently determine the transmission cycle TA of the access coexistence signal. Note that the upper limit needs to be defined and is assumed to be the maximum value TAmax. Here, for the sake of simplicity, the transmission cycle TA is assumed to be equal to the maximum value TAmax, i.e., the access communication system 120 uses a maximum value which is acceptable as the transmission cycle TA of the access coexistence signal.

The access coexistence signal transmitting station of the access communication system 120, and the in-home-system master stations 111 and 131 of the in-home communication systems 110 and 130 determine coexistence signal transmission timing in accordance with the procedures of FIGS. 4 and 6. In FIG. 10, the access communication system 120 transmits an access coexistence signal 1061 at time 1021, and thereafter, transmits an access coexistence signal every 5/6 of the power supply cycle of the power line. Specifically, access coexistence signals 1062 and 1063 are transmitted at times 1024 and 1014, respectively. The in-home communication systems 110 and 130 transmit an in-home coexistence signal 1071 at time 1011, and thereafter, transmit an in-home coexistence signal every 1/2 of the power supply cycle of the power line. Specifically, in-home coexistence signals 1072 to 1074 are transmitted at times 1012 to 1014, respectively.

Thus, here, by transmitting the access coexistence signal and the in-home coexistence signal asynchronously, the access coexistence signal transmission timing and the in-home coexistence signal transmission timing coincide at a frequency of once per 15 times 1/6 (reference cycle) of the power supply cycle, i.e., once per 2.5 times the power supply cycle. When the in-home coexistence signal transmission timing is in the slot A, the in-home-system master stations 111 and 131 of the in-home communication systems 110 and 130 can try to detect an access coexistence signal transmitted by the access communication system 120. Therefore, when the access communication system 120 is present, an access coexistence signal can be detected once per 2.5 times the power supply cycle.

In the first embodiment, since the transmission cycle TA is equal to the maximum value TAmax, a master station of an in-home communication system may take a margin of 2.5 times the power supply cycle or more during activation, taking into consideration the possibility that, if another in-home communication system has already been activated when the master station is activated, an access coexistence signal cannot be received due to a communication signal with timing other than the in-home coexistence signal transmission timing (step S601 of FIG. 6).

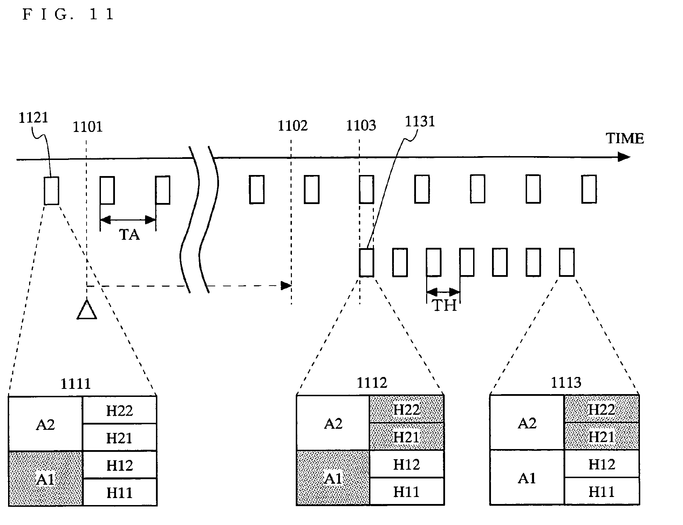

Hereinafter, a specific example of coexistence of communication systems using the coexistence signals having the above-described structures, will be described with reference to FIGS. 11 to 13. Note that it is assumed that, in FIGS. 11 to 13, as described above, an access coexistence signal is transmitted every the transmission cycle TA (= a cycle of 5/6 of the power supply cycle), and an in-home coexistence signal is transmitted every the transmission cycle TH (= a cycle of 3/6 of the power supply cycle).

FIG. 11 is a diagram for describing the case where the in-home communication system 110 participates when the access communication system 120 is operating.
The access-system master station 121 of the access communication system 120, which is already during an operation, transmits an access coexistence signal 1121 every the transmission cycle TA. A coexistence signal 1111 is a coexistence signal at this time point, in which a signal is transmitted in the area A1 so as to notify that the access communication system 120 is using the channel #1 (a hatched portion in FIG. 11, the same is true of the following description). When the in-home communication system 110 is activated at time 1101, detection of a coexistence signal is performed during a period of time corresponding to 7.5 times the power supply cycle. A coexistence signal detected during the period of time is the coexistence signal 1111. When the coexistence signal detection period is finished at time 1102, the in-home-system master station 111 determines a frequency band to be used by itself based on the detected coexistence signal. Here, since the access communication system uses the channel #1, the channel #2 is used. At time 1103 and thereafter, the in-home-system master station 111 transmits an in-home coexistence signal every the transmission cycle TH.

As described above, the access coexistence signal transmission timing and the in-home coexistence signal transmission timing coincide at a frequency of once per 2.5 times the power supply cycle on the power line. A coexistence signal 1112 is a coexistence signal when the access coexistence signal transmission timing and the in-home coexistence signal transmission timing coincide, in which a signal is transmitted in the area A1 so as to notify that the access communication system 120 is using the channel #1, and a signal is transmitted in in the areas H21 and H22 so as to notify that the in-home communication system 110 is using the channel #2. A coexistence signal 1113 is a coexistence signal at transmission timing only for an in-home coexistence signal, in which a signal is transmitted in the areas H21 and H22 so as to notify that the in-home communication system 110 is using the channel #2. Note that, also after participation of the in-home communication system 110, a coexistence signal at transmission timing only for an access coexistence signal is equal to the coexistence signal 1111.

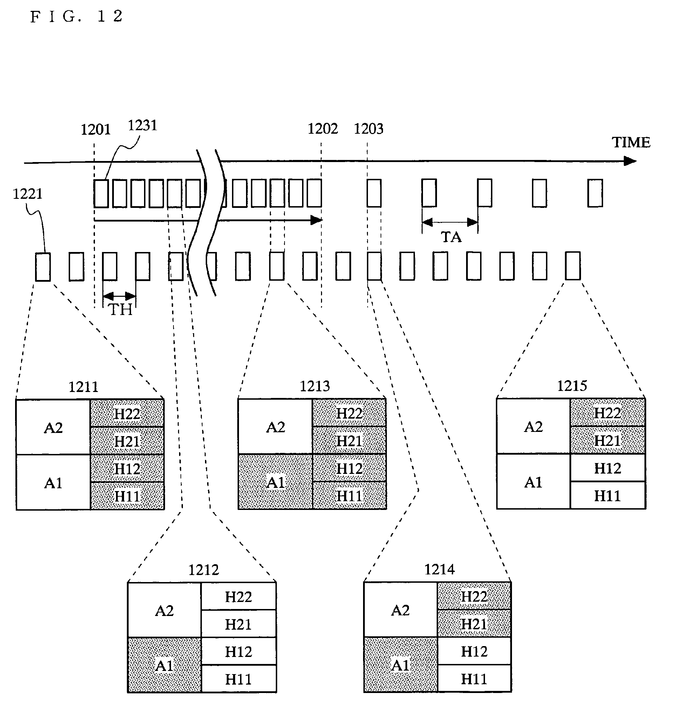

FIG. 12 is a diagram for describing the case where the access communication system 120 participates when the in-home communication system 110 is operating.
The in-home-system master station 111 of the in-home communication system 110, which is already during an operation, transmits an in-home coexistence signal 1221 every the transmission cycle TH. A coexistence signal 1211 is a coexistence signal at this time point, in which a signal is transmitted in the areas H11, H12, H21 and H22 so as to notify that the in-home communication system 110 is using the channels #1 and #2. When the access communication system 120 is activated, detection of an access coexistence signal is performed during a period of time which is longer than or equal to the transmission cycle TA of the access coexistence signal. In this case, since an access coexistence signal is not detected, an access coexistence signal is transmitted a predetermined number of consecutive times from time 1201 to time 1202. During this period of time, the access coexistence signal transmission timing and the in-home coexistence signal transmission timing coincide at a frequency of once per three times of the in-home coexistence signal transmission timing.

A coexistence signal 1212 is a coexistence signal at transmission timing only for an access coexistence signal, in which a signal is transmitted in the area A1 so as to notify that the access communication system 120 is using the channel #1. A coexistence signal 1213 is a coexistence signal when the in-home coexistence signal transmission timing and the access coexistence signal transmission timing coincide, in which a signal is transmitted in the area A1 so as to notify that the access communication system 120 is using the channel #1, and a signal is transmitted in the areas H11, H12, H21 and H22 so as to notify that the in-home communication system 110 is using the channels #1 and #2.

At time 1202, the access communication system 120, which has finished transmitting an access coexistence signal a predetermined number of consecutive times, starts transmitting an access coexistence signal every the transmission cycle TA from time 1203. During this period of time, as described above, the in-home coexistence signal transmission timing and the access coexistence signal transmission timing coincide at a frequency of once per 2.5 times the power supply cycle on the power line. A coexistence signal 1214 is a coexistence signal when the in-home coexistence signal transmission timing and the access coexistence signal transmission timing coincide, in which a signal is transmitted in the area A1 so as to notify that the access communication system 120 is using the channel #1, and a signal is also transmitted in the areas H21 and H22 so as to notify that the in-home communication system 110 is using the channel #2. A coexistence signal 1215 is a coexistence signal at transmission timing only for an in-home coexistence signal, in which a signal is transmitted in the areas H21 and H22 so as to notify that the in-home communication system 110 is using the channel #2.

The in-home-system master station 111 of the in-home communication system 110, which has detected an access coexistence signal (specifically, a signal in the area A1) during the period of time from time 1201 to time 1202, releases the channel #1 which the access communication system 120 tries to use, in accordance with the access communication system priority rule. In this case, the coexistence signal 1213 during the period of time from time 1201 to time 1202 becomes equal to the coexistence signal 1215 after the release.

Note that a jamming signal indicating the presence of itself may be transmitted instead of reducing an interval of transmission timing until a predetermined period of time passes after the start of a communication apparatus. When the jamming signal is used, the in-home communication systems 110 and 130 preferably stop currently executed communication if the state of the communication is deteriorated due to an influence of the jamming signal, and perform detection of an access coexistence signal with priority.

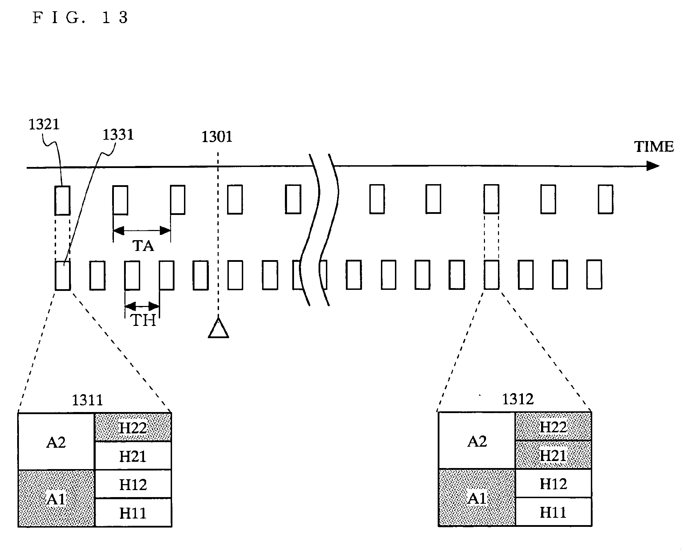

FIG. 13 is a diagram for describing the case where the in-home communication system 130 participates when the access communication system 120 and the in-home communication system 110 are operating.
The in-home-system master station 111 of the in-home communication system 110, which is already during an operation, transmits an in-home coexistence signal 1331 every the transmission cycle TH. The access coexistence signal transmitting station of the access communication system 120, which is also already during an operation, transmits an access coexistence signal 1321 every the transmission cycle TA. A coexistence signal 1311 is a coexistence signal when the in-home coexistence signal transmission timing and the access coexistence signal transmission timing coincide, in which a signal is transmitted in the area A1 so as to notify that the access communication system 120 is using the channel #1, and a signal is transmitted in the area H22 so as to notify that the in-home communication system 110 is using the upper half of the channel #2.

When the in-home communication system 130 is activated at time 1301, detection of a coexistence signal is performed during a period of time equivalent to 7.5 times the power supply cycle. If a coexistence signal is detected during the period of time, the in-home coexistence signal transmission timing is determined and it is also determined that a frequency band which is not currently used is the lower half of the channel #2. Therefore, in this case, by transmitting a signal in the area H21 of the in-home coexistence signal, another communication system is notified that the lower half of the channel #2 is used. A coexistence signal 1312 is a coexistence signal when the in-home coexistence signal transmission timing and the access coexistence signal transmission timing coincide, in which a signal is transmitted in the area A1 so as to notify that the access communication system 120 is using the channel #1, and a signal is transmitted in the area H22 so as notify that the in-home communication system 110 is using the upper half of the channel #2. Also, a signal is transmitted in the area H21 so as to notify that the in-home communication system 130 is using the lower half of the channel #2.

### (Second embodiment)

In a second embodiment, an example in which three communication systems are caused to exist using FDM and Time Division Multiplexing (TDM), will be described.
In the second embodiment, as described in the first embodiment, stations belonging to the communication systems 110 to 130 can each use a channel #1 having a frequency band of 2 MHz to 16 MHz and a channel #2 having a frequency band of 16 MHz to 30 MHz. The access communication system 120 can use either the channel #1 or the channel #2 with priority.

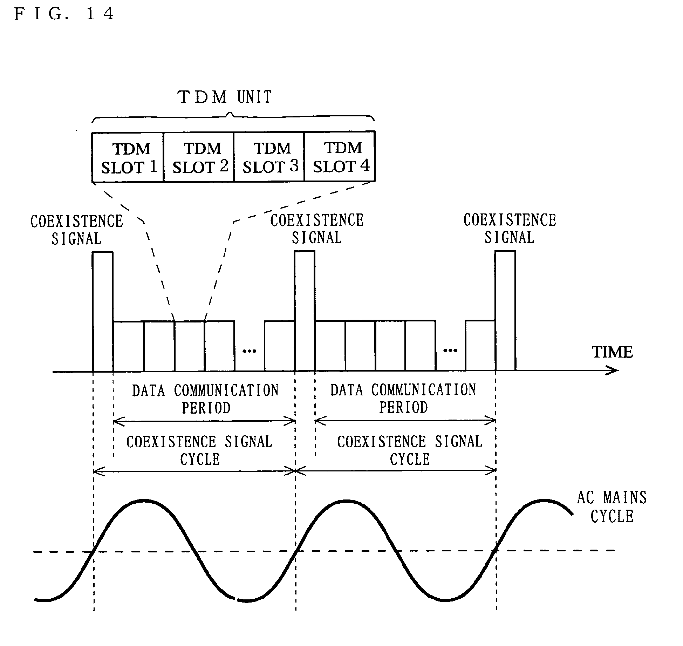

In addition, in the second embodiment, a data communication period between each coexistence signal is divided into a plurality of TDM units, and the TDM unit is divided into four TDM slots 1 to 4. This is configured in view of data communication which it is important to perform in real time. The number of TDM slots and the length of each TDM slot are not limited to those of this example and can be arbitrarily designed. FIG. 14 is a diagram illustrating how a coexistence signal, and a communication signal of each communication system, are transmitted and received by time division. The channels #1 and #2 and the TDM slots 1 to 4 are shared and used (frequency division and time division) by the in-home communication systems 110 and 130 so that the three communication systems coexist.

Note that transmission and reception of a coexistence signal which are performed by each station in the second embodiment are indicated in FIG. 2 as in the first embodiment. The detailed apparatus configuration of each station is the same as that of the first embodiment. Specifically, an exemplary apparatus configuration and operating flow of an access coexistence signal transmitting station belonging to the access communication system 120 are illustrated in FIGS. 3 and 4, respectively; an exemplary apparatus configuration and operating flow of the in-home-system master stations 111 and 131 belonging to the in-home communication system 110 and 130 are illustrated in FIGS. 5 and 6, respectively; and an exemplary apparatus configuration and operating flow of the slave stations 112 and 132 belonging to the in-home communication system 110 and 130 are illustrated in FIGS. 7 and 8, respectively.

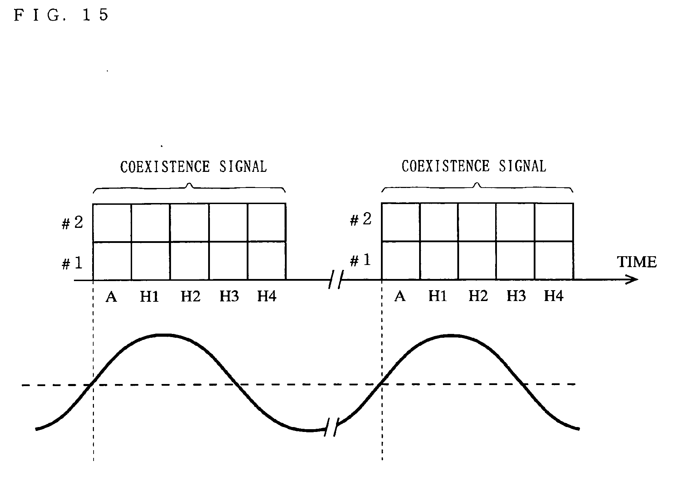

FIG. 15 is a diagram illustrating a detailed example of the coexistence signal of FIG. 14. The coexistence signal of FIG. 15 has a time-frequency matrix structure composed of five time slots (i.e., a slot A and slots H1 to H4) and two frequency channels (i.e., channels #1 and #2). The slots H1 to H4 are used to notify frequency bands used by the in-home communication systems 110 and 130, and correspond to the TDM slots 1 to 4, respectively (FIG. 14). The time-frequency matrix structure can be arbitrarily set, depending on the number of divided channels and the number of divided slots. The time-axis parameter may be a TDM unit instead of a TDM slot.

The slot A is a time slot in which the access communication system 120 transmits an access coexistence signal. The slot A is composed of an area A1 indicating that frequencies corresponding to the channel #1 of 2 MHz to 16 MHz are used, and an area A2 indicating that frequencies corresponding to the channel #2 of 16 MHz to 30 MHz are used. When occupying the channel #1, the access communication system 120 transmits a signal in the area A1 with timing designated by the transmission timing determining section 316. When occupying the channel #2, the access communication system 120 transmits a signal in the area A2 with timing designated by the transmission timing determining section 316. The in-home communication systems 110 and 130 can determine a channel which is being used by the access communication system 120 based on the presence or absence of a signal from the area A1 or A2.

The slots H1 to H4 are time slots in which the in-home communication systems 110 and 130 transmit an in-home coexistence signal. The slot H1 is composed of an area H11 corresponding to the channel #1 and an area H12 corresponding to the channel #2. The slot H2 is composed of an area H21 corresponding to the channel #1 and an area H22 corresponding to the channel #2. The slot H3 is composed of an area H31 corresponding to the channel #1 and an area H32 corresponding to the channel #2. The slot H4 is composed of an area H41 corresponding to the channel #1 and an area H42 corresponding to the channel #2. The in-home communication systems 110 and 130 use the eight areas to share the frequency band of 2 MHz to 30 MHz which is divided into two, and the time which is divided into four. For example, when the in-home communication system 110 uses the frequency band of 2 to 16 MHz of the slot H1, the in-home communication system 110 transmits a signal in the area H11. Thereby, the in-home communication system 130 can determine which frequency band is being used by the in-home communication system 100.

Hereinafter, a specific example of coexistence of communication systems using the coexistence signals having the above-described structure, will be described with reference to FIGS. 16 to 18. Note that, in FIGS. 16 to 18, as defined above, it is assumed that an access coexistence signal is transmitted every the transmission cycle TA (= a cycle of 5/6 of the power supply cycle), and an in-home coexistence signal is transmitted every the transmission cycle TH (= a cycle of 3/6 of the power supply cycle).

FIG. 16 is a diagram for describing the case where the in-home communication system 110 participates when the access communication system 120 is operating.
The access-system master station 121 of the access communication system 120, which is already during an operation, transmits an access coexistence signal 1621 every the transmission cycle TA. A coexistence signal 1611 is a coexistence signal at this time point, in which a signal is transmitted in the area A1 so as to notify that the access communication system 120 is using the channel #1. When the in-home communication system 110 is activated at time 1601, the in-home-system master station 111 detects a coexistence signal during a predetermined period of time. A coexistence signal detected during the period of time is the coexistence signal 1611. When the coexistence signal detection period is finished at time 1602, the in-home-system master station 111 determines a frequency band to be used by itself based on the detected coexistence signal. Here, since the access communication system uses the channel #1, the channel #2 is used. At time 1603 and thereafter, the in-home-system master station 111 transmits an in-home coexistence signal every the transmission cycle TH.

As described above, the access coexistence signal transmission timing and the in-home coexistence signal transmission timing coincide at a predetermined frequency. A coexistence signal 1612 is a coexistence signal when the access coexistence signal transmission timing and the in-home coexistence signal transmission timing coincide, in which a signal is transmitted in the area A1 so as to notify that the access communication system 120 is using the channel #1, and a signal is transmitted in in the areas H12, H22, H32 and H42 so as to notify that the in-home communication system 110 is using the channel #2. A coexistence signal 1613 is a coexistence signal at transmission timing only for an in-home coexistence signal, in which a signal is transmitted in the areas H12, H22, H32 and H42 so as to notify that the in-home communication system 110 is using all slots of the channel #2. Note that, also after participation of the in-home communication system 110, a coexistence signal at transmission timing only for an access coexistence signal is equal to the coexistence signal 1611.

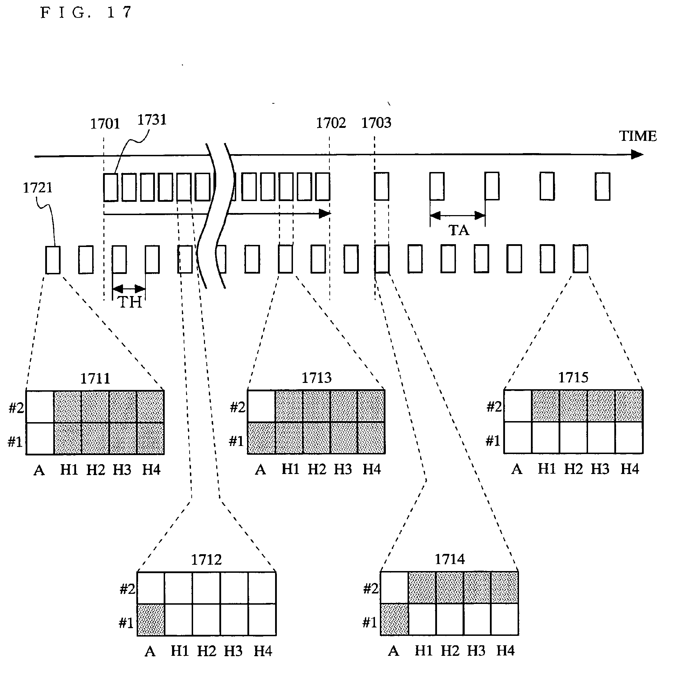

FIG. 17 is a diagram for describing the case where the access communication system 120 participates when the in-home communication system 110 is operating.
The in-home-system master station 111 of the in-home communication system 110, which is already during an operation, transmits an in-home coexistence signal 1721 every the transmission cycle TH. A coexistence signal 1711 is a coexistence signal at this time point, in which a signal is transmitted in the areas H11, H12, H21, H22, H31, H32, H41 and H42 so as to notify that the in-home communication system 110 is using all slots of the channels #1 and #2. When the access communication system 120 is activated, detection of an access coexistence signal is performed during a period of time which is longer than or equal to the transmission cycle TA of the access coexistence signal. In this case, since an access coexistence signal is not detected, an access coexistence signal is transmitted a predetermined number of consecutive times from time 1701 to time 1702. During this period of time, the access coexistence signal transmission timing and the in-home coexistence signal transmission timing coincide at a frequency of once per three times of the in-home coexistence signal transmission timing.

A coexistence signal 1712 is a coexistence signal at transmission timing only for an access coexistence signal, in which a signal is transmitted in the area A1 so as to notify that the access communication system 120 is using the channel #1. A coexistence signal 1713 is a coexistence signal when the in-home coexistence signal transmission timing and the access coexistence signal transmission timing coincide, in which a signal is transmitted in the area A1 so as to notify that the access communication system 120 is using the channel #1, and a signal is transmitted in the areas H11, H12, H21, H22, H31, H32, H41 and H42 so as to notify that the in-home communication system 110 is using all slots of the channels #1 and #2.

The access communication system 120, which has finished transmitting an access coexistence signal a predetermined number of consecutive times at time 1702, starts transmitting an access coexistence signal every the transmission cycle TA from time 1703. During this period of time, as described above, the in-home coexistence signal transmission timing and the access coexistence signal transmission timing coincide at a predetermined frequency as described above. A coexistence signal 1714 is a coexistence signal when the in-home coexistence signal transmission timing and the access coexistence signal transmission timing coincide, in which a signal is transmitted in the area A1 so as to notify that the access communication system 120 is using the channel #1, and a signal is also transmitted in the areas H12 and H22 so as to notify that the in-home communication system 110 is using all slots of the channel #2. A coexistence signal 1215 is a coexistence signal at transmission timing only for an in-home coexistence signal, in which a signal is transmitted in the areas H12, H22, H32 and H42 so as to notify that the in-home communication system 110 is using the channel #2.

The in-home-system master station 111 of the in-home communication system 110, which has detected an access coexistence signal (specifically, a signal in the area A1) during the period of time from time 1701 to time 1702, releases the channel #1 which the access communication system 120 tries to use, in accordance with the access communication system priority rule. In this case, a coexistence signal 1713 during the period of time from time 1701 to time 1702 becomes equal to the coexistence signal 1715 after the release.

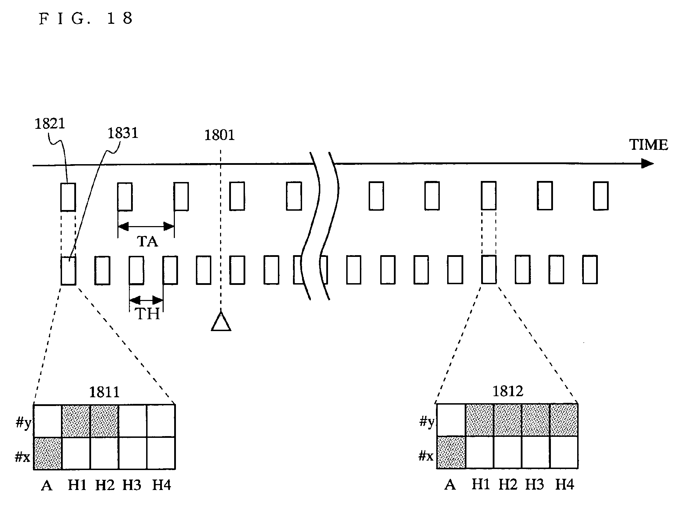

FIG. 18 is a diagram for describing the case where the in-home communication system 130 participates when the access communication system 120 and the in-home communication system 110 are operating.
The in-home-system master station 111 of the in-home communication system 110, which is already during an operation, transmits an in-home coexistence signal 1831 every the transmission cycle TH. The access coexistence signal transmitting station of the access communication system 120, which is also already during an operation, transmits an access coexistence signal 1821 every the transmission cycle TA. A coexistence signal 1811 is a coexistence signal when the in-home coexistence signal transmission timing and the access coexistence signal transmission timing coincide, in which a signal is transmitted in the area A1 so as to notify that the access communication system 120 is using the channel #1, and a signal is transmitted in the areas H12 and H22 so as to notify that the in-home communication system 110 is using the slots H1 and H2 of the channel #2.

When the in-home communication system 130 is activated at time 1701, detection of a coexistence signal is performed during a predetermined period of time. If a coexistence signal is detected during the period of time, the in-home coexistence signal transmission timing is determined and it is also determined that a frequency band which is not currently used is the slots H3 and H4 of the channel #2. Therefore, in this case, by transmitting a signal in the areas H32 and H42 of the in-home coexistence signal, another communication system is notified that the slots H3 and H4 of the channel #2 are used. A coexistence signal 1812 is a coexistence signal when the in-home coexistence signal transmission timing and the access coexistence signal transmission timing coincide, in which a signal is transmitted in the area A1 so as to notify that the access communication system 120 is using the channel #1, and a signal is transmitted in the areas H12 and H22 so as notify that the in-home communication system 110 is using the slots H1 and H2 of the channel #2. Also, a signal is transmitted in the areas H32 and H42 so as to notify that the in-home communication system 130 is using the slots H3 and H4 of the channel #2.

As described above, according to the communication apparatus and the coexistence method of the first and second embodiments of the present invention, an access communication system and an in-home communication system can coexist without synchronization of transmission timings of their coexistence signals.

Although the frequency band of 2 MHz to 30 MHz is divided into the channel #1 and the channel #2, and the channel #1 and the channel #2 use the frequency bands of 2 MHz to 16 MHz and 16 MHz to 30 MHz, respectively, in the first and second embodiments, the present invention is not limited to these numerical values. The channel dividing method may not be fixed.

Also, in the first and second embodiments, a communication apparatus belonging to each communication system does not necessarily need to use both the channel #1 and the channel #2, and may be able to use only the channel #1 or the channel #2. A portion of frequencies or time slots of each channel may be able to be used for transmission and reception. Note that the above-described versatility is conceptual, and minimum required frequency bandwidths or the like vary, depending on a method of setting the number of channels or the number of subchannels.

Note that the above-described embodiments may be each implemented by causing a CPU to interpret and execute predetermined program data capable of executing the above-described procedure, the program being stored in a storage apparatus (a ROM, a RAM, a hard disk, etc.). In this case, the program data may be stored into the storage apparatus via a recording medium, or may be executed directly from the recording medium. The recording medium refers to a semiconductor memory, such as a ROM, a RAM, a flash memory or the like; a magnetic disk memory, such as a flexible disk, a hard disk or the like; an optical disc, such as a CD-ROM, a DVD, a BD or the like; a memory card; or the like. The recording medium is a concept including a communication medium, such as a telephone line, a transfer line, or the like.

Functional blocks of each embodiment, such as the frame transmitting section, the frame receiving section, the communication control section, the access coexistence signal transmitting section, the access coexistence signal receiving section, the access coexistence control section, the access coexistence signal generating section, the in-home coexistence signal transmitting section, the in-home coexistence signal receiving section, the in-home coexistence control section, the in-home coexistence signal generating section, and the like, may be typically implemented as an integrated circuit (LSI: LSI is be called IC, system LSI, super LSI or ultra LSI, depending on the packaging density). Each functional block may be separately mounted on one chip, or a part or the whole of the functional blocks may be mounted on one chip. Also, a portion involved in communication and a portion involved in transmission/reception of a coexistence signal in one communication system may be mounted on separate LSI chips.
The integrated circuit is not limited to LSI. The integrated circuit may be achieved by a dedicated circuit or a general-purpose processor. Further, a Field Programmable Gate Array (FPGA) which can be programmed after LSI production or a reconfigurable processor in which connection or settings of circuit cells in LSI can be reconfigured, may be used.
Furthermore, if an integrated circuit technology which replaces LSI is developed by an advance in the semiconductor technology or the advent of other technologies derived therefrom, the functional blocks may be packaged using such a technology. A biotechnology may be applicable.

The in-home communication apparatus of the present invention may be in the form of an adaptor which converts a signal interface, such as Ethernet interface, IEEE1394 interface, USB interface, or the like, into interface for power line communication, and thereby, can be connected to multimedia apparatuses, such as a personal computer, a DVD recorder, a digital television, a home system server, and the like, which have various kinds of interface. Thereby, a network system which transmits digital data, such as multimedia data or the like, via a power line as a medium with high speed, can be constructed. As a result, a power line which is already provided in homes, offices and the like can be directly used as a network line without newly introducing a network cable, such as a conventional wired LAN. Therefore, the present invention is considerably useful in terms of cost and ease of installation.

The functions of the present invention may be incorporated into the above-described multimedia apparatuses in the future. Thereby, data transfer can be achieved between the multimedia apparatuses via a power source cable thereof. In this case, an adaptor, an Ethernet cable, an IEEE1394 cable, a USB cable, and the like are not required, thereby simplifying wiring. Also, the high-speed power line transmission system of the present invention can be connected via a rooter to the Internet, or via a hub to a wireless LAN or a conventional wired cable LAN, thereby extending a LAN system in which the high-speed power line transmission system of the present invention is used without any problem. Communication data transferred via a power line by power line transmission may be intercepted by an apparatus directly connected to the power line, but is free from an eavesdrop problem with wireless LAN. Therefore, the power line transmission scheme is effective for data protection in terms of security. Further, data transferred on a power line may be protected by IPSec of an IP protocol, encryption of the contents themselves, other DRM schemes, or the like.

As compared to conventional power line communication, high-quality AV content transmission on a power line can be achieved by using a copyright protection function employing the above-described encryption of contents or efficient communication media (an effect of the present invention), and further implementing a QoS function.

### INDUSTRIAL APPLICABILITY

The present invention is usable, for example, when a plurality of communication systems which cannot be connected to each other communicate with each other on the same communication medium without interference by other communication systems. Particularly, the present invention is useful for a modem employing a power line or radio waves as a communication medium and various kinds of electrical apparatuses having these communication functions, and the like.

## Claims

1. A communication system in which one or more in-home communication systems (110, 130) performing communication within a limited area, and an access communication system (120) connecting the limited area to a wide area network, are caused to coexist on the same communication medium by frequency division,
wherein at least one communication apparatus (121, 122) belonging to the access communication system (120) comprises:
a frequency band setting section (315) operable to set a frequency band to be used in the access communication system;
an access coexistence signal generating section (311) operable to generate an access coexistence signal including information about the set frequency band;
a transmission timing determining section (316) operable to determine timing of transmitting the access coexistence signal based on a reference cycle which is a rational multiple of a power supply cycle on a power line onto which power is supplied; and
an access coexistence signal transmitting section (314) operable to transmit the access coexistence signal in accordance with the transmission timing, and
at least one communication apparatus (111, 131) belonging to the one or more in-home communication systems (110, 130) comprises:
an access coexistence signal receiving section (515) operable to receive the access coexistence signal transmitted from the access communication system (120);
a frequency band setting section (518) operable to set a frequency band to be used in the in-home communication system (110, 130) other than the frequency band to be used in the access communication system (120), based on the received access coexistence signal;
an in-home coexistence signal generating section (511) operable to generate an in-home coexistence signal including information about the set frequency band;
a transmission timing determining section (514) operable to determine timing of transmitting the in-home coexistence signal based on the reference cycle so that the in-home coexistence signal has a transmission cycle different from that of the access coexistence signal, and the in-home coexistence signal transmission timing and the access coexistence signal transmission timing coincide at least once per a predetermined period of time; and
an in-home coexistence signal transmitting section (515) operable to transmit the in-home coexistence signal in accordance with the transmission timing.

2. The communication system according to claim 1, wherein the transmission timing determining section (316) of the at least one communication apparatus (121, 122) belonging to the access communication system (120) causes an interval between each transmission timing of the access coexistence signal to be narrower until a predetermined period of time passes after activation of the apparatus than after the predetermined period of time passes.

3. The communication system according to claim 1, wherein the access coexistence signal transmitting section (314) of the at least one communication apparatus (121, 122) belonging to the access communication system (120) transmits a jamming signal indicating the presence of itself until a predetermined period of time passes after activation of the apparatus.

4. The communication system according to claim 1, wherein the at least one communication apparatus (111, 131) belonging to the one or more in-home communication systems (110, 130), when a communication state is deteriorated, stops currently executed communication and performs detection of the access coexistence signal with priority.

5. The communication system according to claim 1, wherein the transmission cycle of the access coexistence signal and the transmission cycle of the in-home coexistence signal are set to have periods of time so that at least one of the transmission cycle of the access coexistence signal and the transmission cycle of the in-home coexistence signal is an odd multiple of the reference cycle, and one of the transmission cycle of the access coexistence signal and the transmission cycle of the in-home coexistence signal is not an integral multiple of the other.

6. The communication system according to claim 1, wherein the transmission cycle of the access coexistence signal is different in time by the reference cycle from the transmission cycle of the in-home coexistence signal.

7. The communication system according to claim 1, wherein the reference cycle has a period of time equivalent to 1/6 of the power supply cycle.

8. In a communication system in which one or more in-home communication systems (110, 130) performing communication within a limited area, and an access communication system (120) connecting the limited area to a wide area network, are caused to coexist on the same communication medium by frequency division, a communication apparatus (111, 131) belonging to the one or more in-home communication systems (110, 130), comprising:
an access coexistence signal receiving section (515) operable to receive an access coexistence signal transmitted from the access communication system(120), the access coexistence signal including information about a frequency to be used in the access communication system;
a frequency band setting section (518) operable to set a frequency band to be used in the in-home communication system (110, 130) other than the frequency band to be used in the access communication system (120), based on the received access coexistence signal;
an in-home coexistence signal generating section (511) operable to generate an in-home coexistence signal including information about the set frequency band;
a transmission timing determining section (514) operable to determine timing of transmitting the in-home coexistence signal, based on a reference cycle which is a rational multiple of a power supply cycle on a power line onto which power is supplied, so that the in-home coexistence signal has a transmission cycle different from that of the access coexistence signal, and the in-home coexistence signal transmission timing and access coexistence signal transmission timing coincide at least once per a predetermined period of time; and
an in-home coexistence signal transmitting section (515) operable to transmit the in-home coexistence signal with the transmission timing.

9. The communication apparatus according to claim 8, wherein the communication apparatus, when a communication state is deteriorated, stops currently executed communication and performs detection of the access coexistence signal with priority.

10. The communication apparatus according to claim 8, wherein the transmission cycle of the access coexistence signal and the transmission cycle of the in-home coexistence signal are set to have periods of time so that the transmission cycle of the in-home coexistence signal is an odd multiple of the reference cycle, and is neither an integral multiple nor an integral submultiple of the transmission cycle of the access coexistence signal.

11. The communication apparatus according to claim 8, wherein the transmission cycle of the in-home coexistence signal is different in time by the reference cycle from the transmission cycle of the access coexistence signal.

12. The communication apparatus according to claim 8, wherein the reference cycle has a period of time equivalent to 1/6 of the power supply cycle.
